Europäisches Patentamt

European Patent Office

Office européen des brevets

(11) Publication number: **0 329 025**
**A2**

# EUROPEAN PATENT APPLICATION

(21) Application number: **89102280.8**

(22) Date of filing: **10.02.89**

(51) Int. Cl.4: **C08K 5/15 , C08L 57/04**

(30) Priority: **18.02.88 US 157470**

(43) Date of publication of application:
**23.08.89 Bulletin 89/34**

(84) Designated Contracting States:
**AT CH DE ES FR GB IT LI**

(71) Applicant: **BASF Aktiengesellschaft**
**Carl-Bosch-Strasse 38**
**D-6700 Ludwigshafen(DE)**

(72) Inventor: **Pillon, Lilianna Z.**
**1445 Errol Rd. East**
**Sarnia Ontario N7S 5S6(CA)**
Inventor: **Cothros, Viviana E.**
**1290 Errol Road East**
**Sarnia Ontario N7S 5L2(CA)**
Inventor: **Midgley, Charles Andrew**
**6705 Moss Lake Drive**
**Hixson Tennessee 37343(US)**

(54) **Epoxide crosslinkable latices.**

(57) It is known to crosslink polymers containing carboxylic acid groups using reactive resins or agents. Usually such systems contain or generate formaldehyde. It is now proposed to crosslink latices of low gel polymers containing carboxylic acid groups with lower alkyl esters of non terminal expoxides of long chain unsaturated fats or oils. Such epoxide esters have a low solubility in water and thus a good pot life yet react when heated at temperatures of less than 150° C in less than 30 minutes.

EP 0 329 025 A2

## EPOXIDE CROSSLINKABLE LATICES

The present invention relates to crosslinking aqueous polymeric dispersions. More particularly, the present invention relates to crosslinking such polymers using lower alkyl esters of epoxidized oils or fats.

It is known to crosslink carboxylated polymers using a number of different systems or agents. Crosslinking resins such as urea/formaldehyde or melamine/formaldehyde are well known. Additionally, it is known to incorporate into the backbone of the polymer crosslinking monomers such as the alkylol-amide groups. Such crosslinking systems have come under increasing pressure due to the concern about the potential to release formaldehyde.

There have been a number of recent patents proposing the use of various crosslinking agents including oxazolines, imidazolidone, and aziridenes. Representative of this art are the abstracts of EP 176 609; Australian Patent 85 46 976 and U.S. 4,605,698.

It is known that epoxides may crosslink carboxylated polymers. Generally to obtain higher rates of reaction, terminal epoxides have been used as crosslinking agents. While such agents are useful to crosslink dry carboxylated polymers, they are not particularly useful in aqueous systems. The epoxide ring tends to open at acid or alkali pHs to form hydroxyl groups which have a lower reactivity. Thus, the problem to overcome is the sensitivity of epoxides to water.

U.S. Patent 3,215,647 discloses that liquid epoxy resins may be used as co-reactive material with latices of carboxylated polymers (col. 4, line 37). Liquid epoxy resins are low molecular weight adjuncts of epihalohydrins and bisphenols. These compounds have internal hydroxy groups and terminal epoxide groups. The terminal epoxide groups tend to hydrolyze to hydroxyl groups under acid or base conditions. The present patent application does not contemplate the use of such terminal epoxide groups.

Example 4 of U.S. Patent 3,369,957 issued February 20, 1968, assigned to Owens Corning Fiberglass teaches coating a glass fabric with a size composition of an ethyl acrylate acrylic acid copolymer and epoxidized soya oil in a 1:1 weight ratio. The coating is cured at 250°F. The patent does not disclose why epoxidized soya oil was selected nor does it suggest a particular advantage to using soya oil. The amount of epoxidized soya oil used in the reference is significantly greater than the amount of epoxidized ester required in the present invention. Additionally the epoxide used in the reference is a triglyceride epoxidized oil which is different from the epoxidized compound used in the present invention.

It is known to incorporate epoxides of esters of fatty acids into various plastics to act as plasticizers and/or heat and light stabilizers. Methods for preparing such epoxidized esters are disclosed in British Patent 790,063 published February 5, 1958 in the name of Rohm and Haas Company.

There are a number of curing agents known for curing non-aqueous epoxide resins. Unfortunately, many of these systems have to be used in the absence of water.

Applicant seeks to provide an aqueous based polymer system which is crosslinkable with an epoxide. The system has a reasonable pot life at low temperature and cures at moderate temperature.

The present invention provides an aqueous dispersion of a polymer and a curing system having a good pot life and being curable on heating at a temperature from 100 to 150°C for times from 20 to 30 minutes comprising per 100 parts by dry weight of an aqueous dispersion of one or more polymeric solids having a gel content of less than 60 weight percent selected from the group consisting of:

(A) polymers comprising:

(i) 20 to 80 percent of one or more $C_{8-12}$ vinyl or vinylidene aromatic monomers which may be unsubstituted or substituted by a chlorine atom or a $C_{1-4}$ alkyl radical;

(ii) from 80 to 20 weight percent of one or more $C_{4-6}$ aliphatic conjugated diolefins which is unsubstituted or substituted by a chlorine atom;

(iii) from 0.5 to 15 weight percent of one or more $C_{3-6}$ ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(c) $C_{1-8}$ alkyl and hydroxyalkyl esters of $C_{3-6}$ ethylenically unsaturated carboxylic acids.

(B) polymers comprising:

(i) 20-45 weight percent of a $C_{3-8}$ alkenyl nitrile;

(ii) from 80 to 55 weight percent of one or more $C_{4-6}$ aliphatic conjugated diolefins which is unsubstituted or substituted by a chlorine atom; and

(iii) from 0.5 to 15 weight percent of one or more C$_{3-6}$ ethylenically unsaturated carboxylic acids or anhydrides; and

(iv) optionally up to 10 weight percent of one or more monomers selected from the group consisting of:
(a) C$_{3-6}$ ethylenically unsaturated aldehydes;
(b) amides of C$_{3-6}$ ethylenically unsaturated carboxylic acids, which amides may be unsubstituted or substituted at the nitrogen atom by up to two radicals selected from the group consisting of C$_{1-4}$ alkyl and hydroxyalkyl radicals; and
(c) C$_{1-8}$ alkyl and hydroxyalkyl esters of C$_{3-6}$ ethylenically unsaturated carboxylic acids.

(C) polymers comprising:

(i) at least 75 weight percent of a mixture comprising:
(a) 100 to 50 weight percent of one or more monomers selected from the group consisting of C$_{1-8}$ alkyl and hydroxyl alkyl esters of C$_{3-6}$ ethylenically unsaturated carboxylic acids and C$_{2-8}$ alkenyl and hydroxyalkenyl esters of C$_{1-8}$ saturated carboxylic acids;
(b) up to 50 weight percent of one or more C$_{8-12}$ vinyl or vinylidene aromatic monomers which may be unsubstituted or substituted by a chlorine atom or a C$_{1-4}$ alkyl radical;

(ii) from 0.5 to 25 weight percent of one or more C$_{3-6}$ ethylenically unsaturated carboxylic acids or anhydrides;

(iii) optionally up to 10 weight percent of one or more monomers selected from the group consisting of:
(a) C$_{3-6}$ ethylenically unsaturated aldehydes;
(b) amides of C$_{3-6}$ ethylenically unsaturated carboxylic acids, which amides may be unsubstituted or substituted at the nitrogen atom by up to two radicals selected from the group consisting of C$_{1-4}$ alkyl and hydroxyalkyl radicals; and

(D) polymers comprising:
(i) from 5 to 40 weight percent of a C$_{2-3}$ olefin;

(ii) from 95 to 60 weight percent of one or more monomers selected from the group consisting of C$_{1-8}$ alkyl and hydroxyalkyl esters of C$_{3-6}$ ethylenically unsaturated carboxylic acids, and C$_{2-8}$ alkenyl and hydroxy alkenyl esters of C$_{1-8}$ saturated carboxylic acids;

(iii) from 0.5 to 15 weight percent of C$_{3-6}$ ethylenically unsaturated carboxylic acids or anhydrides; and

(iv) optionally up to 10 weight percent of one or more monomers selected from the group consisting of:
(a) C$_{3-6}$ ethylenically unsaturated aldehydes;
(b) amides of C$_{3-6}$ ethylenically unsaturated car-

boxylic acids, which amides may be unsubstituted or substituted at the nitrogen atom by up to two radicals selected from the group consisting of C$_{1-4}$ alkyl and hydroxyalkyl radicals; and

(E) polymers comprising:

(i) at least 75 weight percent of one or more monomers selected from the group consisting of vinyl chloride and vinylidene chloride; and

(ii) up to 20 weight percent of one or more monomers selected from the group consisting of C$_{1-8}$ alkyl and hydroxyalkyl esters of C$_{3-6}$ ethylenically unsaturated carboxylic acid;

(iii) from 0.5 to 25 weight percent of one or more C$_{3-6}$ ethylenically unsaturated carboxylic acids or anhydrides; and

(iv) optionally up to 10 weight percent of one or more monomers selected from the group consisting of:
(a) C$_{3-6}$ ethylenically unsaturated aldehydes;
(b) amides of C$_{3-6}$ ethylenically unsaturated carboxylic acids, which amides may be unsubstituted or substituted at the nitrogen atom by up to two radicals selected from the group consisting of C$_{1-4}$ alkyl and hydroxyalkyl radicals; and
up to 10, preferably from 2 to 8 most preferably from 2 to 6 parts by weight per 100 parts by weight polymer of a C$_{1-4}$ alkyl esters of a non-terminal epoxy of a C$_{12-25}$ fat or oil containing at least two epoxy groups per ester radical.

As used in this specification the term gel is that portion of a polymer which is insoluble in a solvent such as toluene, or tetrahydrofuran and that portion of the polymer soluble in a solvent which has a molecular weight greater than 320,000 as measured by gel permeation chromatography.

Figures 1 through 3 are plots of the tensile strength of films made in accordance with the present invention against the elongation. Figure 4 is a plot of tensile strength of films made in accordance with the present invention as a function of cure time at 150° C.

The types of polymers useful in accordance with the present invention may be broadly characterized as carboxylated polymers. The polymers may be characterized as carboxylated styrene-butadiene type polymers (X-SBR), carboxylated acrylonitrile-butadiene (X-NBR) type polymers, carboxylated acrylic type polymers (X-A), carboxylated vinyl ester type (XVA) polymers, carboxylated ethylene vinyl ester polymers, carboxylated ethylene acrylate polymers (X-EA) and carboxylated vinyl or vinylidene type polymers (XVCl or XVDCl).

Apart from the acrylate and vinyl or vinylidene chloride polymers, the polymers of the present invention will generally contain from 0.5 to 15, preferably from 0.5 to 5 weight percent of one or more $C_{3-6}$ ethylenically unsaturated carboxylic acids. Some ethylenically unsaturated carboxylic acids are: acrylic acid, methacrylic acid, fumaric acid, and itaconic acid. The acrylate vinyl and vinylidene type polymers may contain up to about 25, preferably less than 10, most preferably from 0.5 to 5 weight percent of such ethylenically unsaturated carboxylic acids.

Styrene-butadiene type polymers comprise in addition to carboxylic acids from 20 to 80, preferably 40 to 60 weight percent of one or more vinyl or vinylidene aromatic monomer such as styrene, alpha methylstyrene, and chlorostyrene; and from 80 to 20 preferably from 60 to 40 weight percent of one or more $C_{4-6}$ conjugated diolefin which may be unsubstituted or substituted by a chlorine atom. Suitable diolefins include butadiene, isoprene and chloroprene.

Acrylonitrile-butadiene type polymers comprise in addition to the carboxylic acid from 20 to 45 preferably 20 to 35 weight percent of one or more $C_{3-8}$ alkenyl nitriles and from 80 to 55, preferably 80 to 65 weight percent of one or more $C_{4-6}$ conjugated diolefins. Conjugated diolefins have been discussed above. Useful alkenyl nitriles include acrylonitrile and methacrylonitrile.

The acrylate and vinyl ester polymes comprise, in addition to the carboxylic acid:

(1) at least 75 weight percent of a mixture comprising:

(a) from 100 to 50, preferably 100 to 70 weight percent of one or more monomers selected from the group consisting of $C_{1-8}$ alkyl or hydroxy alkyl esters of one or more $C_{3-6}$ ethylenically unsaturated carboxylic acids and $C_{2-8}$ alkenyl and hydroxyalkenyl esters of one or more $C_{1-8}$ saturated carboxylic acids.

(b) up to 50 preferably less than 30 weight percent of one or more of the vinyl aromatic monomers discussed above.

Preferred $C_{1-8}$ alkyl and hydroxyalkyl esters of $C_{3-6}$ ethylenically unsaturated acids include methyl, ethyl, hydroxyethyl, propyl, butyl and ethylhexyl acrylate and methacrylate.

Preferred alkenyl or hydroxyalkenyl esters include vinyl acetate.

These polymers contain no more than 25 preferably less than 15 weight percent of one or more $C_{3-6}$ ethylenically unsaturated carboxylic acids.

The ethylene acrylate, ethylene vinyl acetate type polymers may comprise in addition to the carboxylic acid: from about 40 to 5 preferably from 10 to 25 weight percent of ethylene, propylene or a mixture thereof; and from 60 to 95, preferably from 90 to 75 weight percent of one or more of the above discussed acrylate or vinyl ester monomers.

The vinyl or vinylidene chloride type polymers comprise in addition to the carboxylic acid monomers at least 75 preferably, at least 80, weight percent of vinyl or vinylidene chloride and optionally up to 20, preferably up to 15, weight percent of a $C_{1-8}$ alkyl or hydroxyalkyl ester of a $C_{3-6}$ ethylenically unsaturated carboxylic acid.

Optionally, the above polymers may contain a total of up to 10, preferably less than 5 weight percent of one or more additional functional monomers. Suitable additional functional monomers include: $C_{3-6}$ ethylenically unsaturated aldehydes such as acrolein; amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxy alkyl radicals, such as acrylamides, methacrylamide, N-methylol acrylamide, N-methylol acrylamide and the like; and one or more of the above discussed $C_{1-8}$ alkyl and hydroxy alkyl esters of $C_{3-6}$ ethylenically unsaturated carboxylic acids.

The polymer may be prepared by emulsion polymerization, or by dispersing dry polymer in water. In both cases, the result is an aqueous polymeric dispersion, or a latex. Generally, such latices contain from about 35 to 70, preferably from about 50 to 65 weight percent solids.

The polymers useful in accordance with the present invention preferably have a gel content of less than 60, most preferably less than 40 weight percent. The gel content of the polymer may be controlled in a number of ways including conducting the polymerization to low conversion, or by using modifiers such as $C_{8-15}$ alkyl mercaptans or carbon tetrachloride.

The epoxides useful in the present invention are epoxides which do not contain terminal epoxy groups. Terminal epoxy groups tend to hydrolyze to hydroxyl groups at acid or alkaline pH. Preferably, the epoxide is a $C_{1-4}$ alkyl ester of an epoxidized oil or fat having from about 12 to 25, preferably 18 to 25 carbon atoms. Epoxidized vegetable oils are particularly useful as they are commercially available. There is an advantage to working with such oils. They are less miscible with water and this tends to protect the epoxide groups from hydrolysis.

The ester may be directly blended with the latex in an appropriate amount.

The dispersion of the present invention may be applied to various substrates by conventional means such as casting, coating, spraying, impregnating, web saturation or printing. The dispersions are dried using conventional equipment then cured by heating to temperatures from 100 to 150, preferably from 130 to 140° C for from 20 to 30, preferably 25 minutes.

The dispersions of the present invention may be used to impregnate or coat non-woven webs. The web may be a natural fiber such as cellulose, lignin, or polyamide as in the case of wool, cotton, flax, silk and wood fibers. The fiber may be synthetic such as regenerated cellulose, rayon, polyamide such as Nylon 6 or Nylon 66 or a polyester. The web may be a mixture of various fibers.

The web may be relatively open and porous as in diapers or medical bandages or the web may be tight and relatively continuous as in paper. The pick up of impregnated webs may be up to 150, preferably 30-120, weight percent. In tight continuous webs, the coat weight may vary from 1 to 40 gm/m².

The use of aqueous dispersions of polymers as binders for non wovens and as binders for coatings are well known in the art. The particulars of such use are in numerous references and patents such as European Patent 0,012,032.

The following examples are intended to illustrate the invention and not to limit it. In the examples, parts are parts by dry weight unless otherwise specified.

In the following examples a series of commercially available latices were used. These latices are:

a) carboxylated S-B latex with about 2% carboxylation about 40% styrene and 33% gel

b) carboxylated S-B latex with about 1.5% carboxylation about 25% styrene and 38% gel

c) carboxylated S-B latex with about 2% carboxylation about 60% styrene and 61% gel

d) carboxylated S-B latex with about 2% carboxylation about 60% styrene and 68% gel

e) carboxylated S-B latex with about 2% carboxylation about 40% styrene and 60% gel

f) carboxylated acrylate with about 5% carboxylation

Example 1

A series of blends were prepared. Latices (a) and (f) were mixed with 5 parts, per 100 parts of latex solids of methyl epoxide linseedate (MEL). The MEL was added to the latex directly and as an aqueous emulsion; films were prepared from the latex, latex and 5 parts per 100 of latex solids of MEL; and latex and 5 parts per 100 of latex solids of MEL in the form of an aqueous emulsion.

The films were then cured for 30 minutes at room temperature, 50°C, 75°C, 100°C, 125°C, 150°C.

The elongation and the tensile strength of the sample were then measured. It was found there were no significant differences in properties of the films prepared using MEL directly added to the latex, and the properties of films prepared using emulsified MEL.

At curing temperatures below 100°C there was some reduction in film elongation but there was no experimentally significant increase in tensile strength. It was concluded that at curing temperatures less then 100°C the ability to detect crosslinking is minimal. At temperatures in excess of 100°C there was a significant increase in tensile strength and a corresponding reduction in elongation of the film.

Figure 1 is a plot of mechanical properties of the result of the tests with latex (a) using 5 parts of MEL directly (eg. not emulsified).

Figure 2 is a plot of the mechanical properties of the test results of a film prepared for latex (f) and 5 parts of MEL (eg. no emulsifier).

In figure 1 and 2, the broken lines are the mechanical properties of films made from unmodified latex and cured at room temperature (RT) and 150°C.

Example 2

A series of films were prepared using latices (a) through (e) containing 3 parts of MEL per 100 parts of latex solids. The films were cured at 150°C for 30 minutes and graphs were made of the mechanical properties of the cured films. The results are shown in Figure 3. The results show that it is difficult to observe improved properties using films obtained from a latex having a gel content of greater than 60% and 3 parts per hundred of latex solids of MEL.

Example 3

Two compounds at pH 8.5 were prepared from latex (a). To one compound was added 5 parts of MEL per 100 parts by weight of latex solids. To the second compound was added 5.5 parts of butyl epoxide linseedate (BEL). Films were cast from the compound and a control. The films were heated for various times and the tensile strength of the film was measured. The tensile strength of the film was then plotted as a function of the time.

This plot shows when the tensile strength of the film is increasing and when it has reached a plateau, the intersection of lines extrapolated from the increasing tensile strength slope and the plateau may indicate a cure time.

The results are plotted in Figure 4.

## Claims

1. An aqueous dispersion of a polymer and a curing system having a good pot life and being curable on heating at a temperature from 100 to 150°C for times from 20 to 30 minutes comprising per 100 parts by dry weight of an aqueous dispersion of one or more polymeric solids having a gel content of less than 60 weight percent selected from the group consisting of:

(A) polymers comprising:

(i) 20 to 80 weight percent of one or more $C_{8-12}$ vinyl or vinylidene aromatic monomers which may be unsubstituted or substituted by a chlorine atom on a $C_{1-4}$ alkyl radical;

(ii) from 80 to 20 weight percent of one or more $C_{4-6}$ aliphatic conjugated diolefins which is unsubstituted or substituted by a chlorine atom;

(iii) from 0.5 to 15 weight percent of $C_{3-6}$ one or more ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(c) $C_{1-3}$ alkyl and hydroxyalkyl esters of $C_{3-6}$ ethylenically unsaturated carboxylic acids.

(B) polymers comprising:

(i) 20-45 weight percent of a $C_{3-8}$ alkenyl nitrile;

(ii) from 80 to 55 weight percent of one or more $C_{4-6}$ aliphatic conjugated diolefins which is unsubstituted or substituted by a chlorine atom; and

(iii) from 0.5 to 15 weight percent of one or more $C_{3-6}$ ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(c) $C_{1-8}$ alkyl and hydroxyalkyl esters of $C_{3-6}$ ethylenically unsaturated carboxylic acids.

(C) polymers comprising:

(i) at least 75 weight percent of a mixture comprising:

(a) 100 to 50 weight percent of one or more monomers selected from the group consisting of $C_{1-8}$ alkyl and hydroxyl alkyl esters of $C_{3-6}$ ethylenically unsaturated carboxylic acids and $C_{2-8}$ alkenyl

and hydroxyalkenyl esters of $C_{1-8}$ saturated carboxylic acids;

(b) up to 50 weight percent of one or more $C_{8-12}$ vinyl or vinylidene aromatic monomers which may be unsubstituted or substituted by a chlorine atom or a $C_{1-4}$ alkyl radical;

(ii) from 0.5 to 25 weight percent of one or more $C_{3-6}$ ethylenically unsaturated carboxylic acids or anhydrides;

(iii) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(D) polymers comprising:

(i) from 5 to 40 weight percent of a $C_{2-3}$ olefin;

(ii) from 95 to 60 weight percent of one or more monomers selected from the group consisting of $C_{1-8}$ alkyl and hydroxyalkyl esters of $C_{3-6}$ ethylenically unsaturated carboxylic acids, and $C_{2-8}$ alkenyl and hydroxy alkenyl esters of $C_{1-8}$ saturated carboxylic acids;

(iii) from 0.5 to 15 weight percent of $C_{3-6}$ ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(E) polymers comprising:

(i) at least 75 weight percent of one or more monomers selected from the group consisting of vinyl chloride and vinylidene chloride; and

(ii) up to 20 weight percent of one or more monomers selected from the group consisting of $C_{1-8}$ alkyl and hydroxyalkyl esters of $C_{3-6}$ ethylenically unsaturated carboxylic acid;

(iii) from 0.5 to 25 weight percent of one or more $C_{3-6}$ ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$

alkyl and hydroxyalkyl radicals; and

up to 10, parts by weight per 100 parts by weight polymer of a $C_{1-4}$ alkyl ester of a non-terminal expoxide of a $C_{12-25}$ fat or oil containing at least two epoxy groups per ester radical.

2. A dispersion according to Claim 1, wherein said ester epoxy component is selected from the group consisting of methyl, ethyl and butyl linseedate or soyate.

3. A dispersion according to Claim 2, wherein said epoxy compound is present in an amount 2 to 6 parts by weight per 100 parts by weight of said polymer.

4. A dispersion according to Claim 3, which when spread on a substrate or cast as a film, is capable of being cured on heating at a temperature from 120 to 150°C for a time of from 20 to 30 minutes.

5. A dispersion according to Claim 4, wherein said polymer comprises 80 to 20 weight percent of one or more monomers selected from the group consisting of styrene and alpha methylstyrene;

20 to 80 weight percent of one or more monomers selected from the group consisting of butadiene, isoprene, and chloroprene;

0.5 to 8 weight percent of one or more monomers selected from the group consisting of acrylic acid, methacrylic acid, fumaric acid, and itaconic acid; and

optionally up to 5 weight percent of one or more monomers selected from the group consisting of acrylamide, methacrylamide, N-methylol acrylamide, N-methylol methacrylamide, acrolein, and methyl, ethyl, hydroxyethyl and ethylhexyl acrylates and methacrylates.

6. A dispersion according to Claim 4, wherein said polymer comprises at least 85 weight percent of a mixture consisting of:

from 100 to 70 weight percent of one or more monomers selected from the group consisting of methyl acrylate, ethyl acrylate, hydroxyethyl acrylate, butyl acrylate, ethylhexyl acrylate, methyl methacrylate, ethyl methacrylate, hydroxyethyl methacrylate, butyl methacrylate, ethylhexyl methacrylate and vinyl acetate; and

up to 30 weight percent of one or more monomers selected from the group consisting of styrene and alpha methyl styrene; and

up to 15 weight percent of one or more monomers selected from the group consisting of acrylic acid, methacrylic acid, fumaric acid and itaconic acid; and

optionally up to 5 weight percent of one or more monomers selected from the group consisting of acrylamide, methacrylamide, N-methylol acrylamide, N-methylol methacrylamide, acrolein, and methyl, ethyl, hydroxyethyl and ethylhexyl acrylates and methacrylates.

7. A dispersion according to Claim 4, wherein said polymer comprises:

(i) from 5 to 25 weight percent of ethylene or propylene or a mixture thereof:

(ii) from 95 to 75 weight percent of one or more monomers selected from the group consisting of methyl acrylate, ethyl acrylate, hydroxyethyl acrylate, butyl acrylate, ethylhexyl acrylate, methyl methacrylate, ethyl methacrylate, hydroxyethyl, methacrylate, butyl methacrylate, ethylhexyl methacrylate and vinyl acetate; and

(iii) from 0.5 to 8 weight percent of one or more monomers selected from the group consisting of acrylic acid, methacrylic acid, itaconic acid, and fumaric acid; and

(iv) optionally up to 5 weight percent of one or more monomers selected from the group consisting of acrylamide, methacrylamide, N-methylol acrylamide, N-methylol methacrylamide, acrolein, and methyl, ethyl, hydroxyethyl and ethylhexyl acrylates and methacrylates.

8. A dispersion according to Claim 4, wherein said polymer comprises:

(i) from 92 to 97.5 weight percent of vinyl or vinylidene chloride;

(ii) from 0.5 to 8 weight percent of one or more polymers selected from the group consisting of acrylic acid, methacrylic acid, itaconic acid, and fumaric acid; and

(iii) optionally up to 5 weight percent of one or more monomers selected from the group consisting of acrylamide, methacrylamide, N-methylol acrylamide, N-methylol methacrylamide, acrolein, and methyl, ethyl, hydroxyethyl and ethylhexyl acrylates and methacrylates.

9. A composition comprising per 100 parts by weight of a dispersion according to Claim 1 from 50 to 800 parts by weight of one or more fillers selected from the group consisting of talc, calcium carbonate, clay barytes, titanium dioxide, aluminum hydroxide plastic reinforcing resin, plastic pigments and opacifiers and mica.